# EUROPEAN PATENT APPLICATION

(11) **EP 4 269 177 A1**
(43) Date of publication of application: **01.11.2023**
(21) Application number: 22382400.4
(22) Date of filing: 27.04.2022
(51) Int. Cl.: B60R 11/04, B60R 13/02, G08B 21/06

(54) **VEHICLE TRIM WITH CAMERA FOR VEHICLES**

(71) Applicant: Grupo Antolin-Ingenieria, S.A., 09007 Burgos (ES)
(72) Inventor: JORGE MILLÁN, David, 09007 Burgos (ES); DERRIER, Romain, 78280 Guyancourt (FR); GARCÍA PÉREZ, Óscar, 09007 Burgos (ES)
(74) Representative: Capitán García, Maria Nuria

(57) **Abstract**

Vehicle trim with camera for vehicles including a camera assembly and a fascia that are easily adapted to the vehicle trim, avoiding any external protrusion from the vehicle trim, comprising a fixation bracket, a fascia, a cover plate, a vehicle trim and a camera module with a rear and front housing providing a cavity wherein a first PCB support with a sensor set, that comprises an infrared sensor and a lens, a second PCB support with an infrared light source are included, the fascia includes a separation wall being configured to avoid any interference between the emitting angle of the infrared light source and the field of view of the infrared sensor and the cover plate being mounted flush to the vehicle trim to cover a third opening.

## Description

### FIELD OF THE INVENTION

The present invention lies in the field of arrangements in vehicles using cameras, specifically those for face monitoring of the driver in order to avoid a risk of accident or to identify an allowed user to give permission to entry into the vehicle.

### BACKGROUND OF THE INVENTION

When driving a vehicle, the driver is subjected to fatigue, drowsiness and distractions, among other facts that can become to a risk of accident. In order to prevent such accident, some biometric parameters are measured by face monitoring of the driver by means of a camera, such as head position, eye gazing, etc. Also, other passengers can be monitored for health reasons. The camera is oriented to the user viewpoint position, for instance as defined in UN/ECE-R46. Also, face monitoring can be useful to identify an allowed user, driver or passenger, and gain permission to entry into the vehicle.

Integrations of elements in a vehicle can become a rough task due to the small space remaining nowadays, since a lot of security and electronic components are included all over the vehicle. A camera for biometric measurement is a known proposal for inclusion in the garments of the vehicle: pillars, headliner, cockpit, etc.

Patents CN215773297 an WO2020211544 disclose a camera housing protruding from a pillar, similarly to CN213619618 that also includes a speaker, and similarly to CN211044486 that also includes an infrared light. Those disclosures present the disadvantage that the portion protruded is unaesthetical and could entail a problem of security under an impact after an accident.

Patent CN112866521 discloses a pillar with a camera and a light shielding piece with a light outlet hole, the light shielding piece covers a light-emitting assembly including the camera. Such disclosure provides a configuration with a camera mounted far away the pillar surface, being no flush to such surface, as well as in patent CN213089291 that discloses a camera housing without details.

Patent WO2020135353 discloses a camera assembly including an infrared emission module, an infrared receiving module, and a cover mounted flush to the exterior surface of a pillar lining of a vehicle. The emission and receiving modules are mounted in parallel disposition and with their central axes perpendicular to the cover. This provides the disadvantage of a great interference between the emission and receiving optical fields and besides are not adaptable to a different inclination of the pillar surface.

### DESCRIPTION OF THE INVENTION

The present invention is established and characterised in the independent claim, while the dependent claims describe additional features thereof.

The object of the invention is a vehicle trim with camera for vehicles including a camera assembly and a fascia that are easily adapted to the vehicle trim, avoiding any external protrusion from the vehicle trim.

The present invention is a vehicle trim with camera for vehicles comprising: a fixation bracket that comprises an attaching plate, a camera module, a cover plate, a vehicle trim comprising a body with a third opening; wherein the attaching plate being attached to the body of the vehicle trim, the camera module being attached to the attaching plate of the fixation bracket, the cover plate being mounted to cover the third opening, such as is known in the state of the art.

The vehicle trim is characterised in that the camera module comprises:
- a rear housing that comprises a first base plate, a first lateral wall protruding perimetrally from said first base plate, configuring a first cavity;
- a first PCB support that comprises a first PCB plate, a sensor set, that comprises an infrared sensor and a lens with a field of view, and a first connector, both the sensor set and the first connector being mounted on a surface of the first PCB plate;
- a second PCB support that comprises a second PCB plate, an infrared light source with an emitting angle, normally a near infrared light type with a wavelength range 850-940 nm, being mounted on a surface of the second PCB plate, a second connector connected to the infrared light source;
- a front housing that comprises a second base plate followed by a third base plate, a second lateral wall protruding perimetrally from said second and third base plate configuring a second cavity, the second base plate includes a first hole, the third base plate includes a second hole;

the vehicle trim also comprises a fascia that comprises a fourth base plate with a first opening followed by a second opening, a separation wall between said first and second opening, a third lateral wall protruding from the fourth base plate in correspondence to the first opening, a closing wall closing the third lateral wall and including a third hole; and a cover plate, made of an infrared light permeable material and being fixed to the fourth base plate of the fascia;
wherein the front housing being joined to the rear housing of the camera module in such a way the first and the second cavity are disposed consecutively, the first PCB support being arranged in the first cavity of the rear housing being the surface of the first PCB plate with the sensor set and the first connector opposite to the base plate of the rear housing, the second PCB support being arranged in the second cavity, being the surface of the second PCB plate with the infrared light source opposite to the first PCB support and being attached to the second base plate of the front housing, the first connector being connected to the second connector, the closing wall of the fascia being attached to the second base plate of the front housing, the cover plate being mounted in correspondence to the third opening flush to the body of the vehicle trim to cover the third opening;
wherein the infrared light source being mounted in correspondence to the first hole, the third hole and the first opening, the sensor set being mounted in correspondence to the second hole and the second opening;
and wherein the separation wall being configured to avoid any interference between the emitting angle of the infrared light source and the field of view of the sensor set.

With "vehicle trim" is meant any interior garment of a vehicle, such as a pillar, a headliner, a cockpit, a tray, a console, etc., and any exterior garment, such as a pillar, being such trim normally made of a plastic material, the vehicle is usually a land motor vehicle, but other kind of vehicle is adequate to include the invention, such as an airplane, a boat, etc.

With "PCB" is meant a print circuit board, named by its known acronym and normally used.

The infrared light source and the sensor set, specifically its lens, present, each of them, an optical field normally represented as a cone starting from their center, being assumed that such optical field is well known for the infrared light source, known as emitting angle, and the sensor set with its lens, known as field of view (FoV), of any specific application. The mentioned separation wall is configured to avoid any interference of one of them in the other.

The vehicle trim thus conceived is suitable for face monitoring of any user of a vehicle, being the driver or any of the passengers, in the interior of the vehicle, when the vehicle trim is an interior trim and biometric parameters detect fatigue, drowsiness, distractions, etc., or when accessing to the vehicle, the vehicle trim being an exterior trim and biometric parameters detect a permitted user.

An advantage of the invention, in line with its object, is that the configuration of the camera module, separated from the fascia, makes easy to adapt the fascia to the vehicle trim in each specific case, keeping invariable the camera module, that is, a unique camera module can be used to several and different vehicle trim applications.

Another advantage is that the cover in flush disposition gives a continuity to the vehicle trim surface, which derives into an aesthetic solution with an increase in security avoiding protruding configurations.

Another advantage is the optical isolation of the infrared light source and the sensor set, coming from their disposition and the separation wall between them, which give rise to an optimal image generation avoiding disturbances and then a better driver parameter detection.

Other advantages regarding the features in the dependent claims are mentioned in the detailed description here below.

### BRIEF DESCRIPTION OF THE DRAWINGS

The present document is complemented with a set of drawings as an example for illustrating the preferred embodiment, and which in no way limits the invention.
Figure 1 is an exploded view of the vehicle trim with camera for vehicles of the invention, the vehicle trim being a portion of a pillar, interior or exterior.
Figure 2 is a perspective view of the embodiment of figure 1 without the cover, to appreciate the camera module.
Figure 3 is a perspective view of the camera module with the fascia and the cover of the embodiment of figure 1, without the vehicle trim.
Figure 4 is a transversal section view of the embodiment of figure 1.
Figure 5 is a lateral view of the camera module with the fascia and the cover of the embodiment of figure 1, including indications of optical fields of the camera and the light source.
Figure 6 is a lateral view of the camera module and the cover of figure 5, with an alternative embodiment of the fascia.
Figure 7 is a perspective view of the alternative embodiment of the fascia of figure 6.

### DETAILED DESCRIPTION OF THE INVENTION

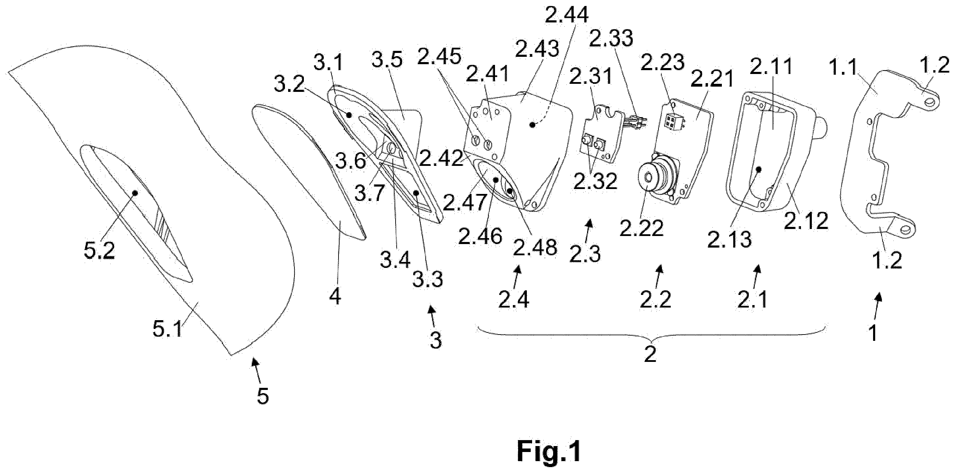

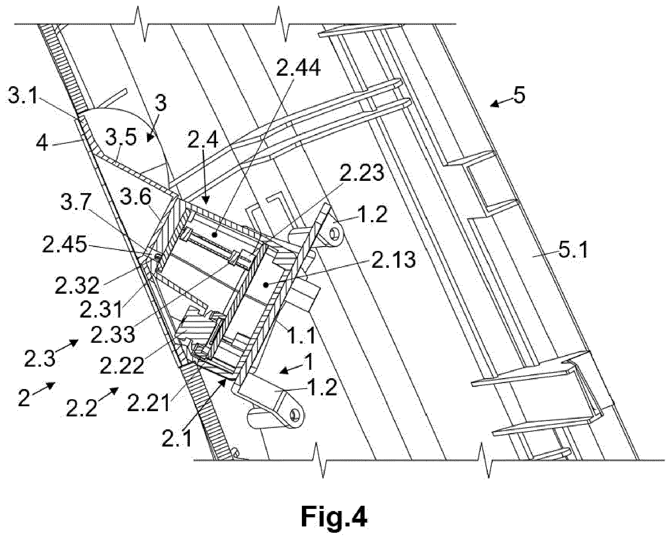

Figure 1 discloses a vehicle trim with camera for vehicles comprising:
- a fixation bracket (1) that comprises an attaching plate (1.1),
- a camera module (2),
- a cover plate (4),
- a vehicle trim (5) comprising a body (5.1) with a third opening (5.2), being in this embodiment a portion of a pillar;
wherein the attaching plate (1.1) being attached to the body (5.1) of the vehicle trim (5); the camera module (2) being attached to the attaching plate (1.1) of the fixation bracket (1), the cover plate (4) being mounted to cover the third opening (5.1), as shown in figure 4.

Also shown in figure 1, the camera module (2) comprises:
- a rear housing (2.1) that comprises a first base plate (2.11), a first lateral wall (2.12) protruding perimetrally from said first base plate (2.11), configuring a first cavity (2.13), as an open box-shaped configuration;
- a first PCB support (2.2) that comprises a first PCB plate (2.21), a sensor set (2.22), that comprises an infrared sensor and a lens with a field of view, and a first connector (2.23), both the sensor set (2.22) and the first connector (2.23) being mounted on a surface of the first PCB plate (2.21);
- a second PCB support (2.3) that comprises a second PCB plate (2.31), an infrared light source (2.32) with an emitting angle, two in the embodiment shown, being mounted on a surface of the second PCB plate (2.31), a second connector (2.33) connected to the infrared light source (2.32), shown in figure 4;
- a front housing (2.4) that comprises a second base plate (2.41) followed by a third base plate (2.42), a second lateral wall (2.43) protruding perimetrally from said second (2.41) and third base plate (2.42) configuring a second cavity (2.44), as an open box-shaped configuration, the second base plate (2.41) includes a first hole (2.45), two in the embodiment shown, the third base plate (2.42) includes a second hole (2.46).

On the second PCB plate (2.31) other usual electronic components could be mounted, such as a sensor, a serialiser, a Fakra^{®} connector, etc. Analogously, other usual electronic components could be mounted on the first PCB support (2.2), such as microprocessor, a wireless communication component, etc.

Also shown in figure 1, the vehicle trim also comprises a fascia (3) that comprises a fourth base plate (3.1) with a first opening (3.2) followed by a second opening (3.3), a separation wall (3.4) between said first (3.2) and second opening (3.3), a third lateral wall (3.5) protruding from the fourth base plate (3.1) in correspondence to the first opening (3.2), a closing wall (3.6) closing the third lateral wall (3.5) and including a third hole (3.7), two in the embodiment shown; and a cover plate (4), made of an infrared light permeable material and being fixed to the fourth base plate (3.1) of the fascia (3), as shown in figure 4.

Also shown in figure 4, the front housing (2.4) being joined to the rear housing (2.1) of the camera module (2) in such a way the first (2.13) and the second cavity (2.44) are disposed consecutively, the first PCB support (2.2) being arranged in the first cavity (2.13) of the rear housing (2.1) being the surface of the first PCB plate (2.21) with the sensor set (2.22) and the first connector (2.23) opposite to the base plate (2.11) of the rear housing (2.1), the second PCB support (2.3) being arranged in the second cavity (2.44), being the surface of the second PCB plate (2.31) with the infrared light source (2.32) opposite to the first PCB support (2.2) and being attached to the second base plate (2.41) of the front housing (2.4), the first connector (2.23) being connected to the second connector (2.33), the closing wall (3.6) of the fascia (3) being attached to the second base plate (2.41) of the front housing (2.4), the cover plate (4) being mounted in correspondence to the third opening (5.2) flush to the body (5.1) of the vehicle trim (5) to cover the third opening (5.1).

Also shown in figure 4, the infrared light source (2.32) being mounted in correspondence to the first hole (2.45), the third hole (3.7) and the first opening (3.2), the sensor set (2.22) being mounted in correspondence to the second hole (2.46) and the second opening (3.3).

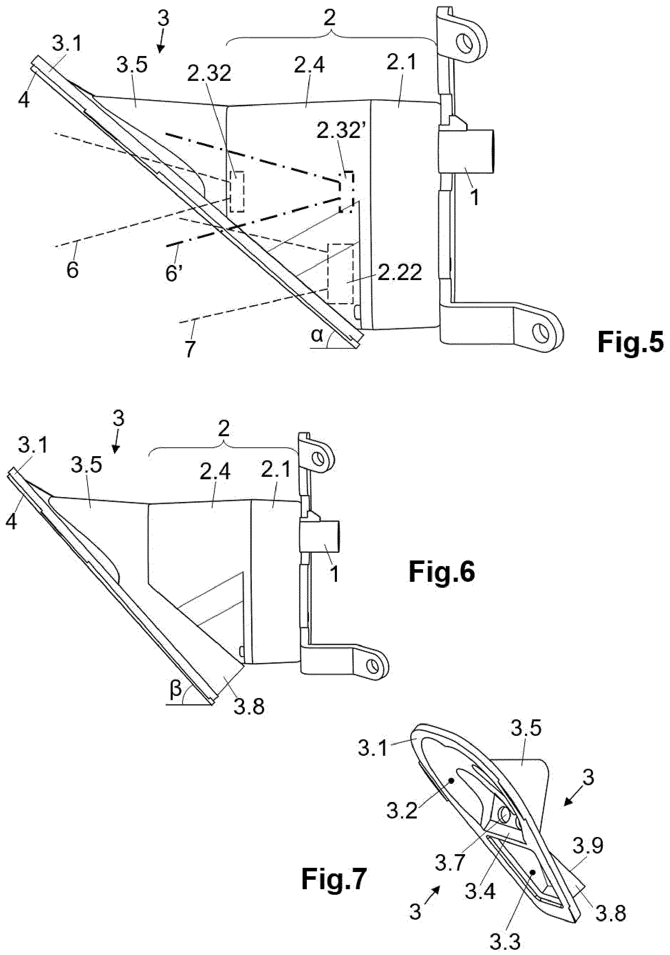

Also shown in figure 4, the separation wall (3.4) being configured to avoid any interference between the emitting angle of the infrared light source (2.32) and the field of view of the sensor set (2.22). Its effect, jointly with the disposition of them, is shown schematically in figure 5, the emitting angle of the infrared light source (6) is represented by a dot line in front of the infrared light source (2.32), as well as the field of view of the sensor set (7), specifically such of its lens, which is represented by a dot line in front of the sensor set (2.22). The two optical fields, emitting angle (6) and field of view (7), of the invention has no interference, however, if, according to the state of the art, an alternative light source (2.32') was placed approximately in line with the sensor set (2.22), both optical fields (6',7) would interfere, making the detection of the sensor set (2.22) more difficult and with some defects.

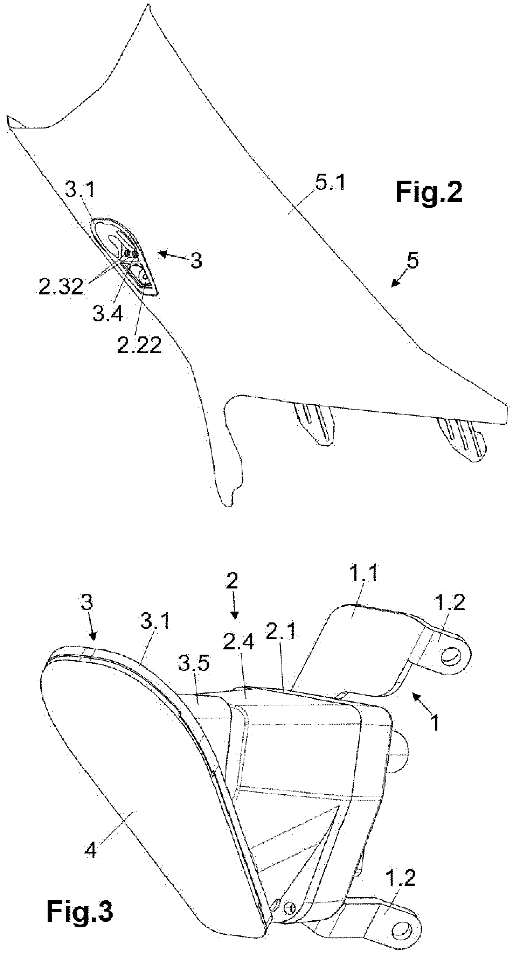

An option is that the second PCB support (2.3) includes two infrared light sources (2.32), shown in figures 1 and 2, being mounted in correspondence to two first holes (2.45) of the front housing (2.4) and then to two third holes (3.7) of the closing wall (3.6). This configuration provides the advantage that the power is divided into two sources, which is also very advantageous since it distributes the heat generated, which also has the consequence of lengthening the life of the components.

Another option that can be included in any of the configurations mentioned is that the front housing (2.4) further comprises a fourth lateral wall (2.47), and a fourth hole (2.48), the fourth hole (2.48) being in correspondence to the sensor set (2.22) and the second hole (2.46), as shown in figures 1 and 4. This configuration gives the advantage of improving the focusing and isolation of the sensor set (2.22).

Another option that can be included in any of the configurations mentioned here above is that the fascia (3) further comprises a fifth lateral wall (3.8) protruding from the fourth base plate (3.1) in correspondence to the second opening (3.3), and a fifth hole (3.9), the fifth hole (3.10) being in correspondence to the second hole (2.46) and the second opening (3.3), as shown in figures 6 and 7. This configuration gives the advantage of an easy adaptation to different bodies (5.1) of the vehicle trim (5), by only changing the fascia (3), keeping the camera module (2), the cover (4) and the fixation bracket (1) invariables. Such adaptation is shown in figures 5 and 6, wherein in figure 5 a first angle of inclination (α) is obtained when including a third lateral wall (3.5) in the fascia, whereas a different angle, second angle of inclination (β), is obtained when further including a fifth lateral wall (3.8), which provides an added inclination of the fourth base plate (3.1) regarding the camera module (2).

An optional detail shown in figures 1, 3-6 is that the fixation bracket (1) comprises at least one tab (1.2), two in the embodiment shown, including each tab (1.2) one perforation being configured to be attached to the body (5.1) of the vehicle trim (5), specifically on turrets as shown in figure 4. This is a known option of fixation, any other known fixation option could be used.

Similarly, the elements are fixed and no specific means are here described since are well known in the state of the art. In the embodiment shown some holes can be observed, which are prepared to receive a corresponding screw or similar fixation means.

## Claims

1. Vehicle trim with camera for vehicles comprising:
- a fixation bracket (1) that comprises an attaching plate (1.1),
- a camera module (2),
- a cover plate (4),
- a vehicle trim (5) comprising a body (5.1) with a third opening (5.2);
wherein the attaching plate (1.1) being attached to the body (5.1) of the vehicle trim (5), the camera module (2) being attached to the attaching plate (1.1) of the fixation bracket (1), the cover plate (4) being mounted to cover the third opening (5.1),
**characterised in that** the camera module (2) comprises:
- a rear housing (2.1) that comprises a first base plate (2.11), a first lateral wall (2.12) protruding perimetrally from said first base plate (2.11), configuring a first cavity (2.13);
- a first PCB support (2.2) that comprises a first PCB plate (2.21), a sensor set (2.22), that comprises an infrared sensor and a lens with a field of view, and a first connector (2.23), both the sensor set (2.22) and the first connector (2.23) being mounted on a surface of the first PCB plate (2.21);
- a second PCB support (2.3) that comprises a second PCB plate (2.31), an infrared light source (2.32) with an emitting angle being mounted on a surface of the second PCB plate (2.31), a second connector (2.33) connected to the infrared light source (2.32);
- a front housing (2.4) that comprises a second base plate (2.41) followed by a third base plate (2.42), a second lateral wall (2.43) protruding perimetrally from said second (2.41) and third base plate (2.42) configuring a second cavity (2.44), the second base plate (2.41) includes a first hole (2.45), the third base plate (2.42) includes a second hole (2.46);
the vehicle trim also comprises a fascia (3) that comprises a fourth base plate (3.1) with a first opening (3.2) followed by a second opening (3.3), a separation wall (3.4) between said first (3.2) and second opening (3.3), a third lateral wall (3.5) protruding from the fourth base plate (3.1) in correspondence to the first opening (3.2), a closing wall (3.6) closing the third lateral wall (3.5) and including a third hole (3.7); and a cover plate (4), made of an infrared light permeable material and being fixed to the fourth base plate (3.1) of the fascia (3);
wherein the front housing (2.4) being joined to the rear housing (2.1) of the camera module (2) in such a way the first (2.13) and the second cavity (2.44) are disposed consecutively, the first PCB support (2.2) being arranged in the first cavity (2.13) of the rear housing (2.1) being the surface of the first PCB plate (2.21) with the sensor set (2.22) and the first connector (2.23) opposite to the base plate (2.11) of the rear housing (2.1), the second PCB support (2.3) being arranged in the second cavity (2.44), being the surface of the second PCB plate (2.31) with the infrared light source (2.32) opposite to the first PCB support (2.2) and being attached to the second base plate (2.41) of the front housing (2.4), the first connector (2.23) being connected to the second connector (2.33), the closing wall (3.6) of the fascia (3) being attached to the second base plate (2.41) of the front housing (2.4), the cover plate (4) being mounted in correspondence to the third opening (5.2) flush to the body (5.1) of the vehicle trim (5) to cover the third opening (5.1);
wherein the infrared light source (2.32) being mounted in correspondence to the first hole (2.45), the third hole (3.7) and the first opening (3.2), the sensor set (2.22) being mounted in correspondence to the second hole (2.46) and the second opening (3.3);
and wherein the separation wall (3.4) being configured to avoid any interference between the emitting angle of the infrared light source (2.32) and the field of view of the sensor set (2.22).

2. Vehicle trim with camera according to claim 1 wherein the second PCB support (2.3) includes two infrared light sources (2.32) being mounted in correspondence to two first holes (2.45) of the front housing (2.4) and then to two third holes (3.7) of the closing wall (3.6).

3. Vehicle trim with camera according to any of the preceding claims wherein the front housing (2.4) further comprises a fourth lateral wall (2.47), and a fourth hole (2.48), the fourth hole (2.48) being in correspondence to the sensor set (2.22) and the second hole (2.46).

4. Vehicle trim with camera according to any of the preceding claims wherein the fascia (3) further comprises a fifth lateral wall (3.8) protruding from the fourth base plate (3.1) in correspondence to the second opening (3.3), a fifth hole (3.9), the fifth hole (3.10) being in correspondence to the second hole (2.46) and the second opening (3.3).
